# EUROPEAN PATENT APPLICATION

(11) **EP 2 645 254 A1**
(43) Date of publication of application: **02.10.2013**
(21) Application number: 10859993.7
(22) Date of filing: 25.11.2010
(51) Int. Cl.: G06F 11/28

(54) **PROCESSOR, ELECTRONIC CONTROL DEVICE, CREATION PROGRAM**

(71) Applicant: TOYOTA JIDOSHA KABUSHIKI KAISHA, Toyota-shi, Aichi-ken, 471-8571 (JP)
(72) Inventor: HONTANI, Kenji, Toyota-shi Aichi 471-8571 (JP)
(74) Representative: Kuhnen & Wacker
(86) International application number: PCT/JP2010/071049
(87) International publication number: WO 2012/070137

(57) **Abstract**

A processor in which plural cores perform respective programs comprises: a first own core execution point acquiring part configured to acquire first code block information if a first core executes an execution history recording instruction described at an execution history recording point in the program, the first code block information indicating, with a single address, a series of instructions executed by the first core; a first other core execution point acquiring part configured to acquire first execution address information of an instruction, the instruction being executed by a second core, if the first core executes the execution history recording instruction; and a first execution point information recording part configured to record the first code block information and the first execution address information in a shared memory in time series such that they are associated with each other.

## Description

### Technical Field

The present invention is related to a processor which executes programs. In particular, the present invention is related to a processor which records execution history of the programs which are executed by plural cores or CPUs.

### Background Art

A number of electronic control apparatuses are installed in vehicle in which the respective electronic control apparatuses execute various programs to control various vehicle-installed apparatuses. Vehicle makers sufficiently verify the vehicle-installed apparatuses including the programs before the shipment, and continuously work for improving the programs and the vehicle-installed apparatuses based on information obtained from the vehicles after the shipment.

For this reason, in the electronic control apparatuses is installed a function of recording the execution history of the programs when a certain event occurs in the vehicle. For example, a technique of storing values of a program counter (referred to as a PC, hereinafter) in series is conventionally known. However, a massive storage capacity is required in order to store the values of the PC on a step basis, and if a sufficient storage capacity is not prepared, the execution history of the step (a certain time in the past), which is required for an analysis, is easily overwritten and thus deleted. On the other hand, if a sufficient storage capacity to store the PC values is prepared, the amount of samples to be analyzed increases, which leads to a problem that at the time of analyzing it becomes difficult to identify the reason why the event occurred or what kind of process was performed.

Further, such a technique is known in which an address of a conditional branch instruction is stored in a trace register when the conditional branch instruction is detected in executing the program (see Patent Documents 1 and 2, for example). Patent Document 1 discloses an address trace apparatus which writes a microinstruction address at a branch condition or near the branch condition in a trace register if the branch condition indicates success. Further, Patent Document 2 discloses a trace system which determines whether a branch address has already been stored at the time of occurrence of the branch and writes the branch address in a trace register only if it is not traced.

Recently, in order to reduce the number of the electronic control apparatuses installed in the vehicle, an attempt had been made to integrate the functions, which were distributed over plural electronic control apparatuses, such that they are incorporated in a single electronic control apparatus. Further, with respect to the CPU of the electronic control apparatus, multiple cores are utilized as is the case with a general-purpose computer. In this case, plural cores in a single CPU execute the programs separately. If the event occurs in such a situation, just storing the branch addresses of the programs of plural cores separately leads to a problem in that it is difficult to identify the problems or the like related to the occurrence of the event. Specifically, if an instruction A executed by a core A and an instruction B executed by a core B are recorded separately, the execution order with respect to the instructions A and B is uncertain, which leads to difficulty of the analysis.
[Patent Document 1] Japanese Laid-open Patent Publication No. 63-257039
[Patent Document 2] Japanese Laid-open Patent Publication No. 61-290546

### Disclosure of Invention

### Problem to be Solved by Invention

In consideration of the problems described above, an object of the present invention is to provide a processor which includes multiple cores or CPUs of a multi-CPU type and can record an execution history effective for an analysis of an occurrence of an event.

### Means to Solve the Problem

The present invention is related to a processor in which plural cores perform respective programs, comprising: a first own core execution point acquiring part configured to acquire first code block information if a first core executes an execution history recording instruction described at an execution history recording point in the program, the first code block information indicating, with a single address, a series of instructions executed by the first core; a first other core execution point acquiring part configured to acquire first execution address information of an instruction, the instruction being executed by a second core, if the first core executes the execution history recording instruction; and a first execution point information recording part configured to record the first code block information and the first execution address information in a shared memory in time series such that they are associated with each other.

### Advantage of the Invention

A processor can be provided which includes multiple cores or CPUs of a multi-CPU type and can record an execution history effective for an analysis of an occurrence of an event.

### Brief Description of Drawings

Fig. 1 is an example of a diagram for schematically explaining storage of an execution history by a processor according to the present embodiment.
Fig. 2 is a diagram for illustrating an example of a hardware configuration of the processor.
Fig. 3 is an example of a diagram for explaining a way of embedding an occurrence reason storing program in a program.
Fig. 4 is a diagram for illustrating an example of a part of a program binary code.
Fig. 5 is a diagram for illustrating an example of a code block address list.
Fig. 6 is a diagram for illustrating an example of a program binary code in which the occurrence reason storing programs are embedded.
Fig. 7 is an example of a flowchart for illustrating a procedure by which a program stores the execution history in the case of a single core.
Fig. 8 is an example of a block diagram of respective cores.
Fig. 9 is an example of a flowchart for illustrating a procedure by which a program stores the execution history in the case of multiple cores.
Fig. 10 is an example of a diagram for explaining storing of code block addresses in a single ring buffer by two cores.
Fig. 11 is an example of a diagram for illustrating a configuration of a multiprocessor microcomputer.
Fig. 12 is an example of a flowchart for illustrating a procedure by which two processors 1 and 2 store in code block addresses in ring buffers 40.
Fig. 13 is an example of a diagram for illustrating a configuration of a processor.
Fig. 14 is an example of a flowchart for illustrating a procedure by which a core 3 records an execution history.

### Description of Reference Symbols

- 11: core
- 12: CPU
- 13: INT
- 14: RAM
- 16: SDRAM
- 20: program
- 40: ring buffer
- 100: processor

### Best Mode for Carrying Out the Invention

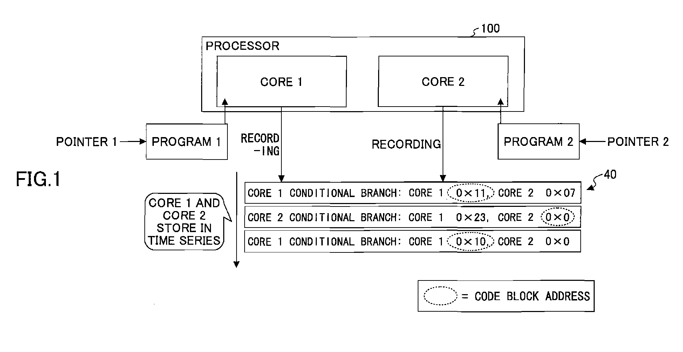

In the following, embodiments will be described by referring to the accompanying drawings. Fig. 1 is an example of a diagram for schematically explaining storage of an execution history by a processor 100 according to the present embodiment. The processor 100 according to the present embodiment has a kind of a function referred to as EDR (Event Data Recorder) which records diagnosis information when a certain event occurs so that vehicle makers or the like can perform an analysis later.

A core 1 and a core 2 execute a program 1 and a program 2 separately and respectively. An instruction of the program 1 the core 1 executes is identified by a pointer 1 and an instruction of the program 2 the core 2 executes is identified by a pointer 2.

The processor 100 according to the embodiment stores code block addresses (described hereinafter) indicated by the pointer 1 or 2 in executing a branch instruction, for example. Since the code block includes several instructions, the storage capacity for an execution history can be reduced in comparison with a configuration in which values of a program counter are stored.

Further, when executing a branch instruction, the core 1 stores not only its own code block address but also an execution point of the core 2 (indicated by the pointer 2). With this arrangement, it becomes possible to identify which instruction the core 2 executed when the core 1 executed the branch instruction. This is also true for the core 2. When executing a branch instruction, the core 2 stores not only its own code block address but also an execution point of the core 1.

The core 1 and core 2 store the execution history in a shared ring buffer 40 in time series such that the oldest information is overwritten. With this arrangement, not only the execution path of the instructions of the cores 1 and 2 but also the execution order of the instructions with respect to the cores 1 and 2 on a block basis become clear, and thus the analysis on how the executions of the instructions have an effect on the occurrence of an event becomes easier.

### [With respect to functional integration]

The processor 100 according to the embodiment is installed in an electronic control unit (ECU). It is assumed that the electronic control unit according to the embodiment provides functions which were provided separately by plural electronic control units in the past. The functional integration with respect to the electronic control unit reduces development cost because the number of the ECUs is reduced. As the result of this, it can be expected that the cost-competitive strength of the vehicle is increased. Further, depending on the design of the processor 100, if the existing programs can be installed in the function-integrated electronic control unit without large scale modification, it can be expected that the development cost of the programs is substantially reduced.

However, integrating plural functions into the electronic control unit means that the instructions for providing plural functions are executed simultaneously, and thus it is anticipated that factors of a problem, if it occurs, will be complicated. Further, since it is not desirable that the execution timing of the programs before the integration is substantially different from that of the programs after the integration, it is practical that multiple cores or CPUs are installed in the electronic control unit such that the multiple cores or CPUs execute the programs separately.

The processor 100 according to the embodiment can appropriately record the diagnosis information even if the multiple cores or CPUs are installed in the function-integrated electronic control unit.

It is noted that integrating functions includes integrating an electronic control unit for a control system and an electronic control unit for an information processing system such as a CAN gateway and a hybrid ECU. However, in particular, a method of recording the execution history according to the embodiment is suited for the analysis of the programs related to a control system which has a high demand on real-time operations (a hybrid control, an engine control, a brake control, a transmission control, etc.).

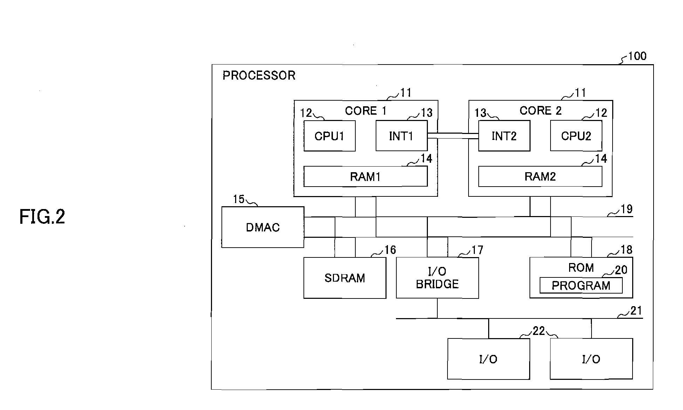

Fig. 2 is a diagram for illustrating an example of a hardware configuration of the processor 100. The processor 100 includes cores 13 (referred to as a core 1 and a core 2, if distinction is necessary) connected to each other via a multi-layer bus 19, a DMAC 15, an SDRAM 16, an I/O bridge 17 and a ROM 18.

The cores each include a CPU 12, an INT 15 and a RAM 14. In other words, the core 1 includes a CPU 1, an INT 1 and a RAM 1, and the core 2 includes a CPU 2, an INT 2 and a RAM 2. With respect to the cores 1 and 2, AMP (Asymmetric Multi-processing) in which predetermined OSs and tasks are allocated to the respective cores may be used, or SMP (Symmetric Multi-processing) in which the cores 1 and 2 execute a shared OS and share a memory (the SDRAM 16, for example) may be used. Alternatively, BMP (Bound Multi-processing) which has intermediate characteristics between the AMP and SMP may be used.

Thus, in some cases the programs 1 and 2 illustrated in Fig. 1 are the same, and in other cases they are independent from each other. Even in the case of the independent programs, the EDR according to the embodiment may be effective if the execution of the instruction of one program has an effect on the execution of the instruction of the other program with a high probability. Thus, even if the installation of the cores 11 is based on the AMP, it is assumed that there is such a relationship (the execution results at one side are utilized at the other side, there is a execution order dependent relationship between the programs 1 and 2, the programs 1 and 2 are synchronized, etc.) that the processing of program 1 has an effect on the core 2 or the processing of program 2 has an effect on the core 1.

The CPU 1 and 2 each include an IFU (Instruction Fetch Unit), a DEC (DECoder), a RF (Register Fetch), a REG (REGister), an LSU (Load Store Unit), a SH (SHifter), and an arithmetic circuit such as an ALU, a MUL and FPU, and can execute a single instruction by a single clock based on a pipeline control.

The RAM 1 is a dedicated memory (primary cache) for the core 1, and the RAM 2 is a dedicated memory (primary cache) for the core 2. In the case of the SMP, in order to keep the cache coherence, a snoop controller (SNC, not illustrated) monitors the update of the data in the RAM 1 and the RAM 2 and communicates the updated data between the RAM 1 and the RAM 2.

The INT 1 and the INT 2 control an inter-CPU interrupt, and control transmission and reception of parameters, etc., between the core 1 and the core 2. Further, the INT 1 and the INT 2 can transmit and receive the parameters, etc., utilizing the RAM 1, the RAM 2 or the SDRAM 16 as a shared memory for communication. The parameter communication between the cores using the INT 1 and the INT 2 is based on the hardware installation. Further, the core 1 and the core 2 can communicate with each other utilizing an API of an inter-core communication provided by the OS.

The DAMC 15 reads and writes the program 20 in the SDRAM 16, the RAM 1 and the RAM 2 according to the demand from the core 1 and the core 2, and performs arbitration of memory access demands from peripheral apparatuses. Further, the DAMC 15 bypasses the cores 1 and 2 to transfer data from the I/O bridge 17 to the SDRAM 16 or from the SDRAM 16 to the I/O bridge 17. The SDRAM 16 is a memory (secondary cache) for providing the program 20 or data if the miss hit occurs at the RAM 1 or the RAM 2 during the execution of the program 20 by the cores 1 and 2. At least a part of the SDRAM 16 is shared between the cores 1 and 2.

The ROM 18 stores the special program 20 which provide the post-integration function, and in the program 20 is embedded an occurrence reason storing program. A embedding method is also one of the features of the embodiment. It is noted that the ROM 18 may be disposed at the outside of the processor 100, and the OS and a device driver (a platform) are also stored in the ROM 18 depending on its capacity.

The I/O bridge 17 converts a frequency, a voltage, etc., between the multi-layer bus 19 and the I/O bus 21. To the I/O bus 21 are connected various I/Os 22. The I/Os 22 are interfaces for connecting the processor 100 to outside apparatuses, such as a CAN controller, various actuators, sensors, switches.

### [Embedding occurrence reason storing program]

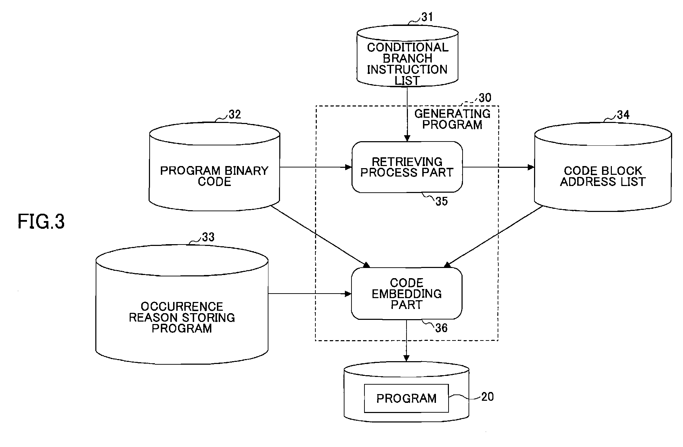

Fig. 3 is an example of a diagram for explaining a way of generating the program 20. Schematically, the program 20 is generated by embedding an occurrence reason storing program 33 in a program binary code 32.

The process illustrated in Fig. 3 is executed by a program (referred to as a generating program 30, for the sake of a distinction) which is executed by a computer (not illustrated). A retrieving process part 35 and a code embedding part 36 are functions provided by the generating program 30. It is noted that the computer, which execute the generating program 30, may be a general-purpose PC (personal computer) which includes a CPU, a RAM, a ROM, an HDD, an input/output apparatus, etc.

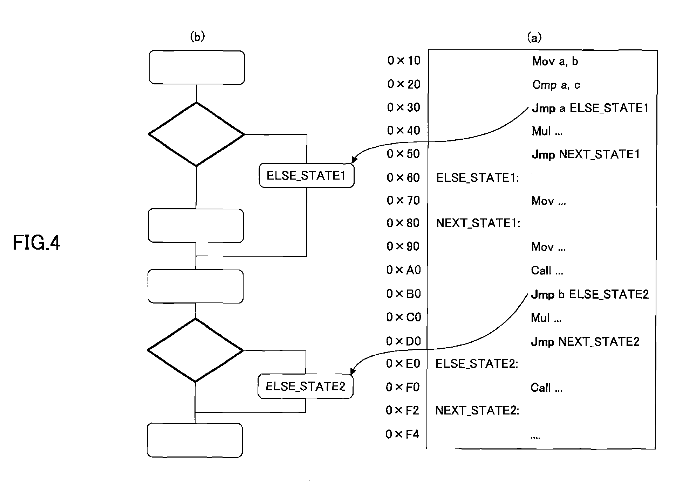

The program binary code 32 is the function-integrated program and does not include a function (EDR function) of recording the execution history provided by the processor 100. Fig. 4 (a) illustrates a part of the program binary code 32, and a flowchart in Fig. 4 (b) is illustrated for explaining correspondence between a branch condition and the program binary code 32. For example, when a compiler compiles a source code described by C language, an object code written in machine language can be obtained. Fig. 4 illustrates the object code with assembly language such that it can be read by humans. In the case of the C language, there are many such descriptions where a grouping of functions is described with a function name and "{code}", and the function is called from a main function. When such descriptions are compiled, labels are given to the functions. Thus, the assembly code from a label in Fig. 4 to a point immediately before the next label corresponds to a function or can be regarded as a grouping of functions.

Further, in the case of the C language or the like, IF-Else statement, Switch statement, While statement, etc., are prepared as control statements, such descriptions are made so that the function is called if a certain condition is met or not met. Such descriptions in the source code are described "Jmp label name" in the assembly code.
As illustrated in the flowchart of Fig. 4 (b), if the branch conditions described by the control statements (rhombus) are met or not met, the instructions are not executed in order of address. This flow of the process is expressed by "Jmp" in the assembly code. Thus, it can be recoginzed that the process (function) greatly changes between before and after the description "Jmp". It is noted that "Jmp" is also referred to as a conditional branch instruction hereinafter.

In consideration of the feature of the descriptions in the assembly code described above, a single grouping of functions is described from a label to a label, from a label to "Jmp", or from "Jmp" to the next "Jmp", and thus it is appropriate to retrieve such a grouping of functions as a single function. According to the embodiment, a series of codes, which can be regarded as a functionally single, is referred to as a code block.

Since the process does not branch between the code blocks, if a single address (referred to as a code block address, hereinafter) which identifies the code block is recorded, it becomes possible to identify more codes based on reduced information. Even if the single grouping of functions starts from the label, "Jmp" is executed before that. Thus, the address of that "Jmp" (conditional branch instruction) can be used as the code block address.

Therefore, the generating program 30 stores conditional branch instruction list 31 of the conditional branch instructions in advance, or describes it in the HDD or the generating program 30. In the example illustrated in Fig. 4, "Jmp" is the conditional branch instruction. It is noted that the label names may also be registered in the conditional branch instruction list 31.

Further, an instruction "Call" for calling a subroutine is the same as the conditional branch instruction in such a sense that it causes the execution history to change. Thus, it is also effective to register "Call" in the conditional branch instruction list 31.

With this arrangement, the code blocks can be listed in the conditional branch instruction list 31 with a sufficiently small unit. However, the reduced unit of the code block means the increased number of embedding places as described hereinafter, which leads to increased overhead of the program. For this reason, preferably, the unit of the code block (a branch instruction and a label registered in the conditional branch instruction list 31) is adjusted according to the processing capability of the processor 100.

It is noted that the code block address is the address of the conditional branch instruction; however, in term of the address indicated by the pointer, it is a narrower term of an execution point which means the address of the instruction being executed. According to the embodiment, they are distinctly separated; however, there is no substantial difference between them.

Returning to Fig. 3, the retrieving process part 35 reads operation codes (mnemonic codes) of the program binary code 32 one by one, and registers the read operation code in a code block address list 34 if the read operation code corresponds to the conditional branch instruction list 31.

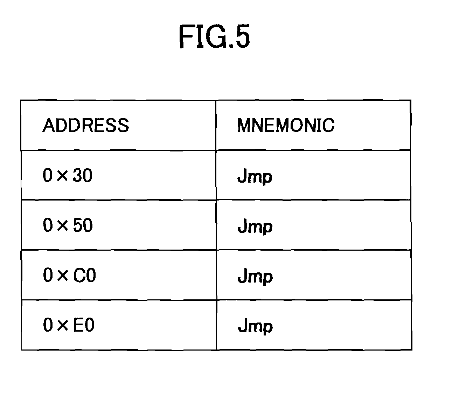

Fig. 5 is a diagram for illustrating an example of the code block address list 34. According to the code block address list 34, the address is associated with the mnemonic code; however, the mnemonic code is described for the sake of explanation and thus is not necessary. The retrieving process part 35 reads the assembly code in order of address, and registers the addresses "0x30, 0x50, 0xC0, 0xE0" which correspond to the conditional branch instruction list 31. The addresses designate the respective code blocks, and are used in recording the execution history. It is noted that this address is a relative address from the beginning of the program.

Next, the code embedding part 36 in Fig. 3 embeds the occurrence reason storing program 33. The occurrence reason storing program 33 is a conventional program for recording the execution history, and can be triggered by a event, in particular, to record or stop recording the execution history. The occurrence reason storing program 33 stores the address of the executing instruction. The description embedded according to the embodiment in order for the processor 100 to provide this function is "Call SAVE_Log", for example.

Thus, the code embedding part 36 describe "Call SAVE_Log" before the address registered in the code block address list 34.

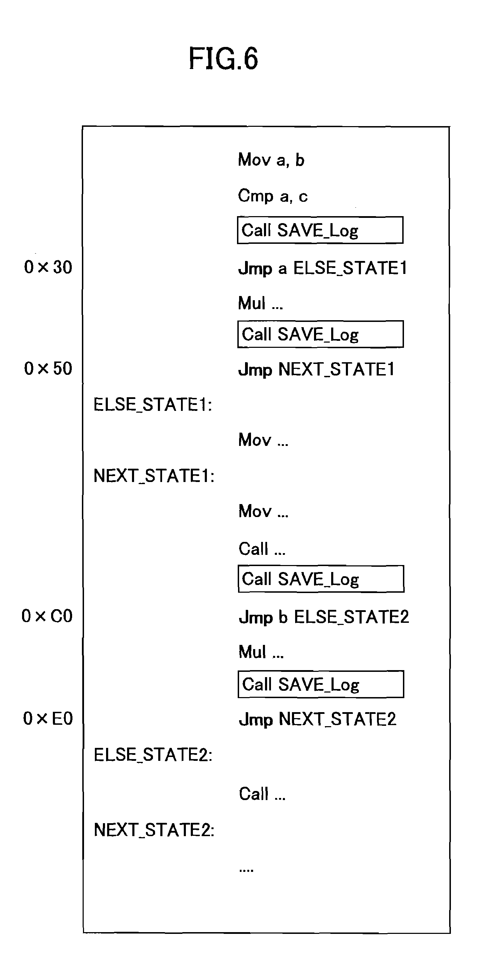

Fig. 6 illustrates an example of a program binary code 32 in which the occurrence reason storing programs 33 are embedded. "Call SAVE_Log" is described before the addresses "0x30, 0x50, 0xC0, 0xE0". When the core 1 or 2 executes "Call SAVE_Log", it stores the address of the next instruction in the ring buffer 40 as the code block address. It is noted that since the address of the next Jmp instruction is already set in the PC (program counter) at the time of executing "Call SAVE_Log", the address of the next instruction corresponds to the current value of the PC. The program thus generated by the generating program 30 is stored in the ROM 18 of the processor and is shipped together with the vehicle or written after the shipment.

### [Operation procedure in the case of single core]

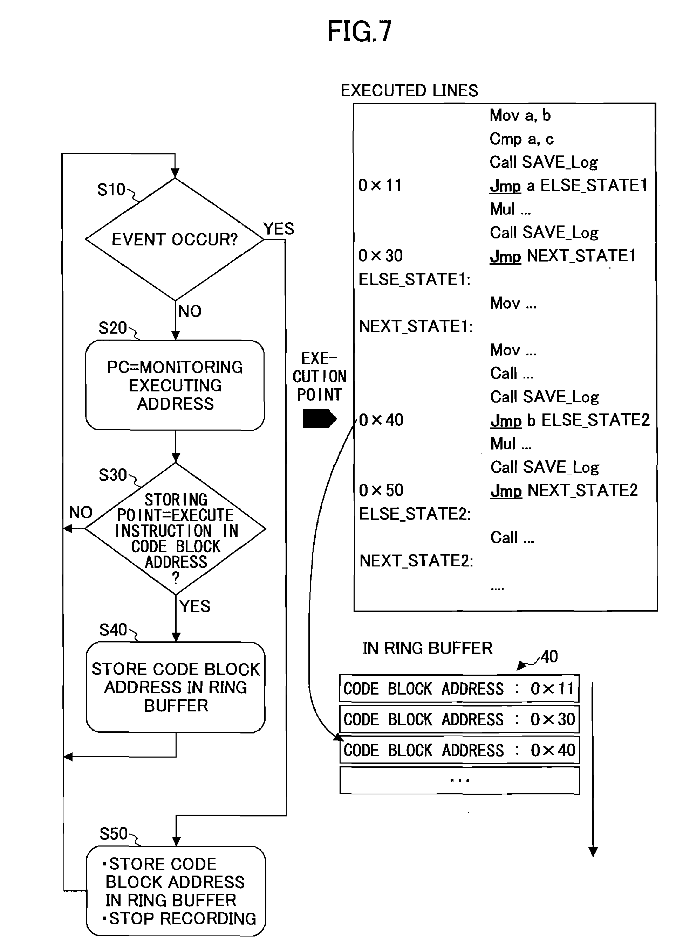

Fig. 7 is an example of a flowchart for illustrating a procedure by which the program 20 stores the execution history in the case of a single core. The procedure in Fig. 7 is executed repeatedly if an ignition switch of the vehicle is turned on (or a main system is turned on in the case of a hybrid vehicle or an electric vehicle).

The program 20 monitors whether an event occurs in the vehicle (S10). The typical event includes an expansion of an airbag, a detection of an acceleration greater than a threshold, a call button for an emergency support center being pressed by a driver, etc. In other words, the event corresponds to the detection of situations in which a relatively important abnormality occurring in the vehicle has a high probability. If the electronic control unit in which the processor 100 is installed detects the event, this program detects the event. If other electronic control unit detects the event, the event is reported to the processor via the CAN communication or the like.

If the occurrence of the event is not detected (No in S10), the processor 100 executes the program 20 in order of address (S20).

Then, when the processor 100 executes the "Call SAVE_Log" embedded in the program 20 (S30), the processor 100 stores the code block address in the ring buffer 40 (S40). The program 20 does not positively determine whether it has reached the code block address storing point; as a result of this, the program 20 stores the code block address only if it reaches the code block address.

For example, if the execution point of the processor 100 (i.e., the value of the PC) is "0x40", the program 20 stores "0x40" in the address of the ring buffer 40 where the oldest code block address is stored. If the code block address can be identified, the code of a single grouping of functions can be identified. Thus, it is possible to effectively store the execution history with the reduced capacity of the ring buffer 40. It is noted that the address of the ring buffer 40 where the oldest code block address is stored is indicated by the pointer.

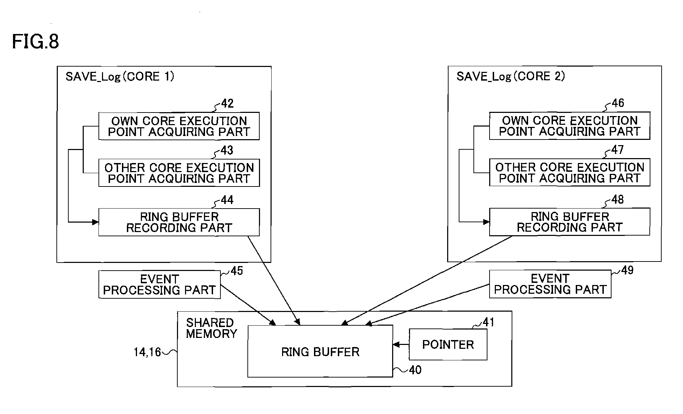

Next, since the process routine returns to S10, the program 20 repeats storing the code block address until the event occurs. If the occurrence of the event is detected in step S10 (Yes in S10), the program 20 calls an event processing part (illustrated in Fig. 8, for example) associated with the occurrence of the event, stores the execution point in ring buffer 40 and stops storing thereafter (S50). With this arrangement, it is possible to store the execution path of the program 20 before the occurrence of the event. For example, in order to stop storing the code block address after the occurrence of the event, the event processing part sets such a flag which means prohibition of recording to the ring buffer 40, or sets a predetermined value (NULL or FFFF, for example) which means prohibition of recording at the pointer. The "Call SAVE_Log" embedded in the program 20 can stop storing the code block address after the occurrence of the event by determining whether to record the code block address based on the flag of the ring buffer 40 or the value of the pointer.

### [Operation procedure in the case of multiple cores]

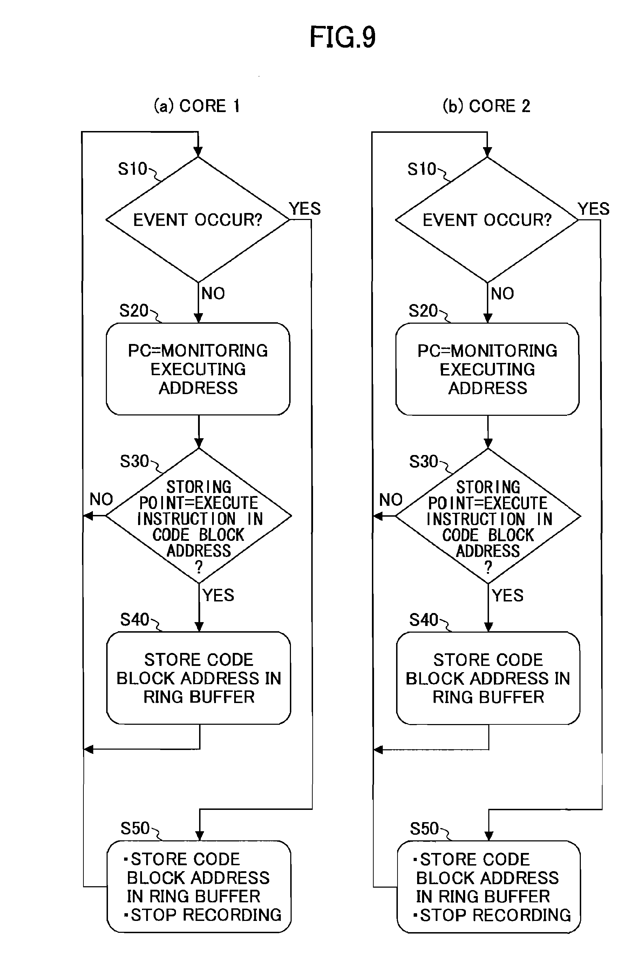

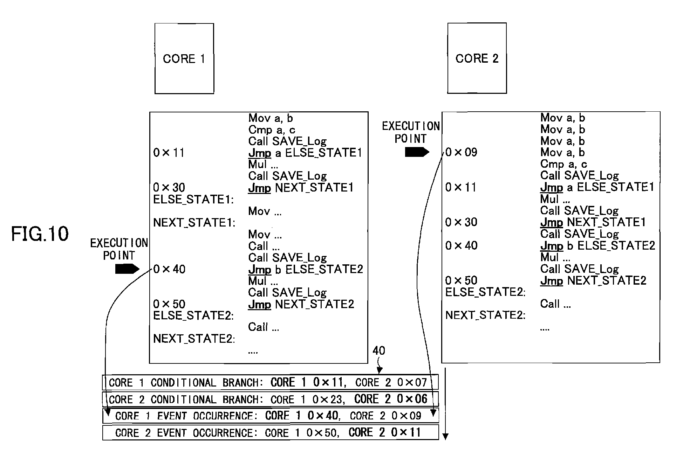

Fig. 8 is an example of a block diagram of respective cores. Fig. 9 is an example of a flowchart for illustrating a procedure by which the program 20 stores the execution history in the case of multiple cores. Fig. 10 is an example of a diagram for explaining storing of code block addresses to a single ring buffer 40 by two cores.

As illustrated in Fig. 8, the cores 1 and 2 includes, as functions included in "SAVE_Log", own core execution point acquiring parts 42 and 46, other core execution point acquiring parts 43 and 47, and ring buffer recording parts 44 and 48, respectively. Further, the cores 1 and 2 include event processing parts 45 and 49 as processes corresponding to the occurrence of the event, respectively. These respective functions are explained with reference to a flowchart. Further, the ring buffer 40 is stored in the shared memory (the RAM 1, the RAM 2 or SDRAM 16). The pointer 41 is kept having the same value in the respective registers of the cores 1 and 2, or the pointer 41 is shared by the shared memory. The pointer 41 indicates the address of the ring buffer 40 where the next code block address is to be stored.

The procedure in Fig. 9 is substantially the same as the procedure in Fig. 7 in the case of the single core; however, in Fig. 9, the cores 1 and 2 execute the procedure in Fig. 7 separately. •The case where step 40 in Fig. 9 (a) is executed;

When the instruction executed by the core 1 reaches "Call SAVE_Log", the own core execution point acquiring part 42 acquires the execution point which corresponds to the code block address. The execution point may be the value of the PC. According to Fig. 10, since the core 1 executes the instruction in the address "0x11" at the next step, the own core execution point acquiring part 42 acquires the code block address "0x11" and notifies the ring buffer recording part 44 of it.

Next, the other core execution point acquiring part 43 of the core 1 queries the core 2 about the execution point of the core 2 to acquire the execution point of the core 2. The other core execution point acquiring part 43 acquires the execution point from the core 2 utilizing the hardware-based or the software-based inter-core communication method. If it is assumed that the core 2 executes the instruction of the address "0x07", the other core execution point acquiring part 43 acquires the address "0x07" and notifies the ring buffer recording part 44 of it.

The ring buffer recording part 44 stores the code block address of the core 1 and the execution point of the core 2 in the address of the ring buffer 40 indicated by the pointer 41 such that the code block address and the execution point are associated with each other. Storing two items such that they are associated with each other means such a storing manner that one item can be used to identify the other, and includes storing them at a higher order byte and a lower order byte in a predetermined address, storing them in successive addresses, or giving the same identifiers to them. It is noted that the ring buffer recording part 44 increments the value of the pointer 41 by one (corresponding to the address length) until the maximum address of the ring buffer 40 is reached at which the ring buffer recording part 44 returns the value of the pointer 41 to an initial value.

In this way, as illustrated in Fig. 10, in the ring buffer 40 is recorded "core 1 conditional branch: core 1 0x11, core 2 0x07". From "core 1 conditional branch", it becomes clear which core recorded it. Further, from "core 1 0x11, core 2 0x07", it becomes clear that the core 2 was executing the instruction of 0x07 when the core 1 executed the conditional branch instruction of 0x11.
- The case where step 40 in Fig. 9 (b) is executed;

The procedure by which the core 2 executes step 40 is the same. When the instruction executed by the core 2 reaches "Call SAVE_Log", the own core execution point acquiring part 46 acquires the execution point as the code block address. Here, the own core execution point acquiring part 46 acquires the address "0x06", and notifies the ring buffer recording part 48 of it.

The other core execution point acquiring part 47 of the core 2 queries the core 1 about the execution point of the core 1 to acquire the execution point of the core 1. Here, the other core execution point acquiring part 47 acquires the address "0x23", and notifies the ring buffer recording part 48 of it.

The ring buffer recording part 48 stores the execution point of the core 1 and the code block address of the core 2 in the address of the ring buffer 40 indicated by the pointer 41 such that they are associated with each other.

In this way, as illustrated in Fig. 10, in the ring buffer 40 is recorded "core 2 conditional branch: core 1 0x23, core 2 0x06". From "core 2 conditional branch", it becomes clear which core recorded. Further, from "core 1 0x23, core 2 0x06", it becomes clear that the core 1 was executing the instruction of 0x23 when the core 2 executed the conditional branch instruction of 0x06.

Further, since the core 1 and the core 2 record the code addresses in the ring buffer 40 in time series, the execution order of the conditional branch instructions executed by the cores 1 and 2 becomes clear. Specifically, if only the core 1 records the code block address in time series and only the core 2 records the code block address, it is difficult to determine which conditional branch instruction was executed first between the conditional branch instruction of the core 1 and the conditional branch instruction of the core 2 at the time of analysis. This is substantial in the case of the ring buffer 40. Thus, the execution histories of the cores 1 and 2 cannot be reproduced in an integrated manner. In contrast, according to the processor 100 of the embodiment, even if the cores 1 and 2 execute the conditional branch instruction separately, the execution histories of the cores 1 and 2 are recorded in the ring buffer 40 in time series, which makes the order of the execution of the conditional branch instructions of the cores 1 and 2 clear.

It is noted that if the timestamp is recorded at the time of recording the code block address, the order of the execution of the conditional branch instructions of the cores 1 and 2 can be determined even if the cores 1 and 2 record the code block addresses separately; however, this leads to a problem that the processing load and the required capacity of the ring buffer 40 are increased.
- The case where the event is recorded;
Since the cores 1 and 2 are disposed in the same processor 100, the cores 1 and 2 detect the occurrence of the event at substantially the same time. Thus, the event processing part 45 of the core 1 and the event processing part 49 of the core 2 each store the code block addresses. In this case, it is anticipated that the two event processing parts 45 and 49 start recording of the code block addresses at substantially the same time; however, since the access to the ring buffer 40 is exclusively controlled based on hardware or software resources, the event processing parts 45 and 49 record the code block addresses in order of the access timing.

For example, the event processing part 45 executes the series of the processes of the own core execution point acquiring part 42, the other core execution point acquiring part 43 and the ring buffer recording part 44 to acquire the code block address "0x40" as the execution point and the address "0x09" as the execution point of the core 2, and stores them in the ring buffer 40. In this way, "core 1 event occurrence: core 1 0x40 core2 0x09" is recorded.

This is also true for the event processing part 49 of the core 2. The event processing part 49 executes the series of the processes of the own core execution point acquiring part 46, the other core execution point acquiring part 47 and the ring buffer recording part 48 to acquire the code block address "0x11" as the execution point and the address "0x50" as the execution point of the core 1, and stores them in the ring buffer 40. In this way, "core 2 event occurrence: core 1 0x50 core2 0x11" is recorded.

In order to stop recording the code block addresses, one of the event processing parts 45 and 49, which records the code block address earlier, for example, notifies the other of the completion of the recording. When one of the event processing parts 45 and 49 of the cores 1 and 2 receives the notification, it records that the other event processing part 45 or 49 finishes recording the code block address due to the occurrence of the event by setting a flag in its ON state, etc. The other event processing part 45 or 49 determines whether it can stop recording based on the status of the flag, when it finishes recording the code block address due to the occurrence of the event. If it is determined that the event processing parts 45 and 49 can stop recording, the event processing parts 45 and 49 stop recording as is the case with the single core.

In this way, as illustrated in Fig. 10, in the ring buffer 40 is recorded the code block address and the execution point such as "core 1 event occurrence: core 1 0x40, core 2 0x09" and "core 2 event occurrence: core 1 0x50, core 2 0x11".

At the time of the analysis, the vehicle maker or a service person of a dealer uses an external tool to read information from the ring buffer 40. The code block addresses are read in order of address in the ring buffer 40. The reading starts from the address which is subsequent to the address at which "event occurrence" is recorded until the last address. Then, the recording contents of the ring buffer 40 are read from the leading point to the address at which "event occurrence" is recorded. In this way, the execution history of the cores 1 and 2 is obtained. It is noted that even if the information "event occurrence" is not recorded, it is possible for the service person or the external tool to identify the address at which the code block address at the time of the occurrence of the event based on the address indicated by the pointer 41.

The service person or the like examines the execution history of the program 20 by the cores 1 and 2 to determine whether the program 20 has executed in the intended order, or whether there is an unexpected execution history element. With this determination, the distinction between the occurrence of the event due to the program 20 and the occurrence of the event not due to the program 20 can be made, and the reason for the occurrence of the event can be identified with high accuracy or the time required to identify the reason for the occurrence of the event can be reduced.

### [Useful information to be stored other than address]

It is explained as an example that information stored in the ring buffer 40 by the cores 1 and 2 is the code block address and the execution point; however, the following information for identifying the reason for the occurrence of the event may be stored in addition to the code block address and the execution point.

### (i) General purpose registers of the cores 1 and 2, a flag, a stack pointer, an input value

The cores 1 and 2 include various registers. Not only the general purpose register but also the flag and the stack pointer are a kind of a register. In the general purpose register are stored values obtained during the calculations (temporarily stored for the purpose of storing working data). By storing the values together with the code block address, it becomes possible for the service person, etc., to infer whether the calculation result affected the occurrence of the event, etc.

In the flag are stored values which indicate the execution results when the CPUs 1 and 2 execute particular instructions. For example, an overflow flag is set to "1" if an overflow occurs. A zero flag is set to "1" if the calculation result becomes zero. A SF flag is set to "1" if the calculation result becomes negative. Thus, by storing the values together with the code block address, it becomes possible for the service person, etc., to infer whether the fact that the calculation result becomes an unexpected value affects the occurrence of the event, etc.

In the stack are stored contents of the register, address of the function, arguments, variables, etc., at the time of executing the function. Further, if this function calls another function, in the stack are stored contents of the register of the called function, address of the function, arguments, variables, etc. The stack pointer indicates the latest storage position of these items of information. Thus, by storing the stack pointer together with the code block address, it becomes possible for the service person, etc., to verify the execution history based on the progression of the stack pointer.

The input values include detection values of the sensors input from the I/O 22, data received from other electronic control apparatuses, etc., for example. The input values are stored in the SDRAM 16, the RAM 1 and the RAM 2, for example, or stored in the core 1 or 2. The input values are used as a calculation source. Thus, by storing the input values together with the code block address, it becomes possible for the service person, etc., to verify whether the input values were appropriate as the calculation source.

### (iii) information about branch destination

Although the code block address is the address of the branch point, if the address of the branch destination is also recorded, the execution history can be recorded in more detail. The address of the branch destination is described in an operand such as "Jmp a ELSE_STATE1". Thus, when the cores 1 and 2 execute "Call SAVE_Log", the cores 1 and 2 may read the operand of the instruction of the execution point as well as the execution point, and store them together with the code block address.

Further, "Call SAVE_Log" may be described again at the branch destination. In this case, when the core executes "Call SAVE_Log" at the branch destination, the core reads the execution point stored in the PC, which enable storing the address of the branch destination.

### [Interruption]

The core 1 or 2 may interrupt the other, or the core 1 or 2 may be interrupted by another core (not illustrated). At the time of the occurrence of the interruption, the INTs 1 and 2 start up an interrupt handler according to the contents of the interruption (interrupt vector) to execute a predetermined process. Thus, at the time of the occurrence of the interruption, the address of the executing instruction changes significantly. However, in contrast to the conditional branch instruction, it is difficult for the cores 1 and 2 to predict when the interruption occurs.

For this reason, there are following ways of recording the code block address at the time of the occurrence of the interruption.
- Describing "Call SAVE_Log" at every predetermined step of the program binary code 32.
   In other words, whenever the interruption occurs, the code block address immediately before the interruption can be recorded within the predetermined steps. However, since the increased number of "Call SAVE_Log" causes overhead, it is preferable that the number of steps in the interval is optimized.
- Describing "Call SAVE_Log" in the program which the interrupt handler initiates.

At the time of the occurrence of the interruption, a context including the PC, etc., is stacked. Thus, the program initiated after the occurrence of the interruption can refer to the context at the time of the occurrence of the interruption with the stack pointer. Since the value of the PC is stored in the context, the cores 1 and 2 can store the execution point at the time of the occurrence of the interruption.

### [In the case of multiprocessor microcomputer]

In the foregoing, a configuration in which a single processor includes plural cores or CPUs is described; however, the way of recording the execution history according to the embodiment is also useful for a configuration in which plural processors each include one or more cores or CPUs.

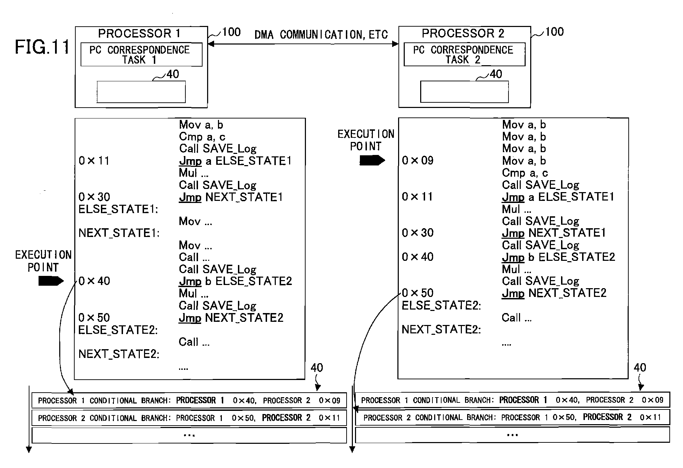

Fig. 11 is an example of a diagram for illustrating a configuration of a multiprocessor microcomputer. A processor 1 and a processor 2 are connected via a bus. The processors 1 and 2 may include one or more cores or CPUs. The processor 1 includes a ring buffer 40 for the processor 1 and the processor 2 includes a ring buffer 40 for the processor 2. The ring buffers 40 are provided separately in terms of freedom of memory sharing; however, the ring buffer 40 for one processor may be used by the other.

As is explained above, "SAVE_Log" is described before the conditional branch instruction. The code block address and the execution point are recorded by the execution of "SAVE_Log" such that they are associated with each other. The processors 1 and 2 communicate with each other utilizing interprocessor communication means such as a DMAC, a debug port. Thus, the processor 1 can acquire the value of the PC of the processor 2 and the processor 2 can acquire the value of the PC of the processor 1.

Further, according to Fig. 11, the ring buffers 40 are provided separately, and thus the respective processors include PC correspondence tasks 1 and 2, respectively. The PC correspondence tasks 1 and 2 record the execution point of the own processor when the other processor executes "SAVE_Log".

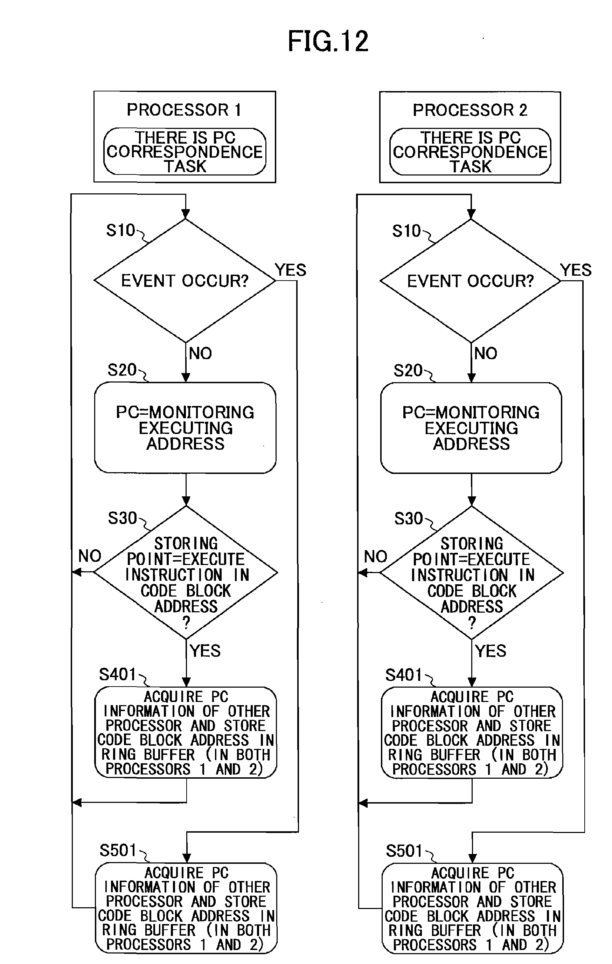

Fig. 12 is an example of a flowchart for illustrating a procedure by which two processors 1 and 2 store the code block addresses in the ring buffers 40. The procedure in Fig. 12 differs from the procedure in Fig. 9 in step S40.

### •S401 in Fig. 12 (a)

When the instruction executed by the processor 1 reaches "Call SAVE_Log", the own core execution point acquiring part 42 acquires the execution point which corresponds to the code block address. The own core execution point acquiring part 42 acquires the address "0x40", for example, and notifies the ring buffer recording part 44 of it.

Then, the other core execution point acquiring part 43 queries the processor 2 about the execution point of the processor 2 utilizing DMA communication or the like, and acquires the execution point of the processor 2. If it is assumed that the processor 2 executes the instruction of the address "0x09", the other core execution point acquiring part 43 acquires the address "0x09" and notifies the ring buffer recording part 44 of it.

The ring buffer recording part 44 stores the code block address of the processor 1 and the execution point of the processor 2 in the address of the ring buffer 40 indicated by the pointer 41 such that the code block address and the execution point are associated with each other. In this way, as illustrated in Fig. 11, in the ring buffer 40 of the processor 1 has recorded "processor 1 conditional branch: processor 1 0x40, processor 2 0x09".

Further, the processor 2 generates the interrupt when it receives the query for the execution point from the other core execution point acquiring part 43 of the processor 1, and thus executes the PC correspondence task 2. First, the PC correspondence task 2 of the processor 2 acquires the execution point which corresponds to the value of the PC. Further, the PC correspondence task 2 queries the processor 1 about the execution point utilizing DMA communication or the like, and acquires the execution point of the processor 1. This execution point corresponds to the code block address or the address near the code block address. In order to omit this query, the other core execution point acquiring part 43 of the processor 1 may notify the processor 2 of the execution point (corresponding to the code block address in this case) when the other core execution point acquiring part 43 of the processor 1 inquires about the execution point.

Then, the PC correspondence task 2 of the processor 2 stores the code block address of the processor 1 and the execution point of the processor 2 in the ring buffer such that they are associated with each other. In this way, as illustrated in Fig. 11, in the ring buffer 40 of the processor 2 has recorded "processor 1 conditional branch: processor 1 0x40, processor 2 0x09". In other words, a copy of the ring buffer 40 can be obtained, and the same information as is the case where the processors 1 and 2 share the ring buffer 40 can be obtained.

It is noted that, also in the case of recording the execution history at the time of the occurrence of the event, the processors 1 and 2 store the same (or substantially the same) execution history in the corresponding ring buffers 40 (S501).

### •S401 in Fig. 12 (b)

It is the same as S401 in Fig. 12 (a) except that the processor 2 generates a trigger. However, since the processor 2 executes the code block address, the execution history is recorded in the processors 1 and 2 such as "processor 2 conditional branch: processor 1 0x50, processor 2 0x11".

In this way, if the processor 1 executes "SAVE_Log" the processors 1 and 2 store the same (or substantially the same) execution history in the corresponding ring buffers 40, and if the processor 2 executes "SAVE_Log" the processors 1 and 2 store the same (or substantially the same) execution history in the corresponding ring buffers 40.

In this way, since the processors 1 and 2 store the same execution history whichever of the processors 1 and 2 executes "SAVE_Log", also in the multiprocessor microcomputer not only the execution path of the instructions of the processors 1 and 2 but also the order of the execution between the processors 1 and 2 becomes clear.

In this way, not only in a single processor but also in the multiprocessor microcomputer in which plural processors are installed, the execution histories can be stored such that they are associated with each other. It is noted that in the case where there are three or more processors, all the processors may record the same execution history and the execution procedure is the same as the case where there are two processors.

### [Other embodiment]

In the case of a configuration in which the cores 1 and 2 which execute the program 20 store the execution history, it is necessary to embed in advance in the program 20 the instruction for recording the execution history, such as "Call SAVE_Log". This is because if it is assumed that the cores 1 and 2 determine whether to execute the conditional branch instruction while executing the program 20, it is necessary to determine at each step whether the next instruction is the conditional branch instruction.

However, if a core 3 other than the cores 1 and 2 which execute the program 20 is provided for recording the execution history, the necessity for embedding in advance in the program 20 the instruction for recording the execution history, such as "Call SAVE_Log", can be reduced.

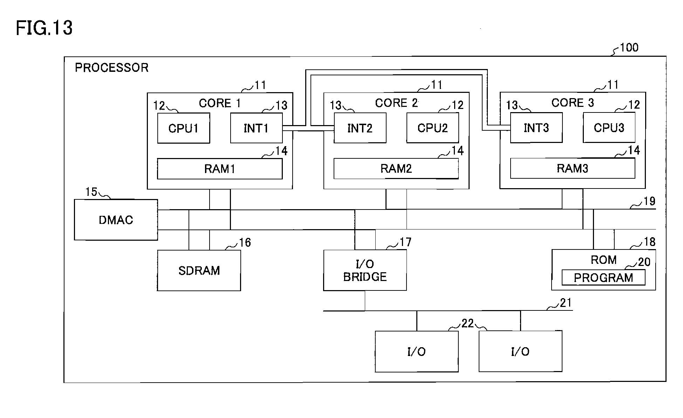

Fig. 13 is a diagram for illustrating an example of a hardware configuration of the processor 100. In Fig. 13, the explanation for the same part as illustrated in Fig. 2 is omitted. The INT 3 of the core 3 is connected to the INT 1 and the INT 2. The core 3 does not execute the program 20 for the control or the like, and executes a dedicated execution history recording program for recording the execution history.

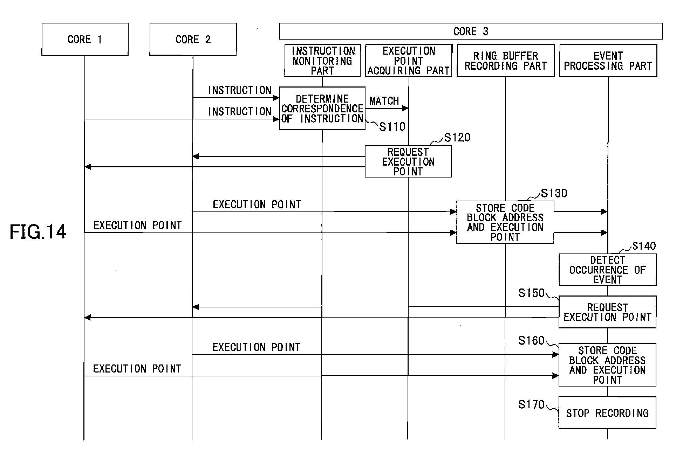

Fig. 14 is an example of a flowchart for illustrating a procedure by which the execution history recording program of the core 3 records an execution history. The core 3 includes an instruction monitoring part, an execution point acquiring part, a ring buffer recording part and an event processing part which are implemented by executing the execution history recording program.

The instruction monitoring part acquires values of respective instruction buffers (or instruction decoders) of the cores 1 and 2 whenever the PCs of the cores 1 and 2 are updated, and monitors whether the instruction executed by the core 1 or 2 corresponds to the instruction such as Jmp which is registered in advance (same as conditional branch instruction list 31) (S110). If the instruction executed by the core 1 or 2 corresponds to the registered instruction, the instruction monitoring part notifies the execution point acquiring part of it.

The execution point acquiring part requests the core 1 or 2, which executes the conditional branch instruction, to provide the code block address, and requests the other core to provide the execution point (S120).

The ring buffer recording part stores the code block address and the execution point obtained from the cores 1 and 2 in the ring buffer 40 (S130). In this way, whichever of the cores 1 and 2 executes the conditional branch instruction, the core 3 can record the code block address and the execution point of the cores 1 and 2. It is noted that information about which core executes the conditional branch instruction is also recorded.

It is noted that the process of the event processing part in the case of the occurrence of the event is the same as the case of the two cores. When the event processing part detects the occurrence of the event (S140), it requests the cores 1 and 2 to provide the execution points (S150). The event processing part stores the execution points such that they are associated with each other (S160), and then stops recording (S170).

Thus, by providing the third core 3 dedicated for EDR, it becomes unnecessary for the generating program 30 to embed "Call SAVE_Log" in the program 20, thereby reducing the development cost.

### [With respect to a processor 100 with three or more cores]

In the foregoing, the example in the case of two cores is described; however, the processor 100 may include a further core other than the cores 1 and 2. However, even if there are three or more cores, the process procedures of the respective cores don't change significantly. Specifically, when the core 3 executes "Call SAVE_Log", an own core execution point acquiring part of the core 3 acquires the address of its own and another core execution point acquiring part acquires the execution points from the cores 1 and 2. A ring buffer recording part 3 of the core 3 stores the execution points of the cores 1 and 2 and the code block address of the core 3 in the address of the ring buffer 40 indicated by the pointer 41 such that they are associated with each other. This is also true for the cores 1 and 2.

Further, on the other hand, even if there are three or more cores, if the core 3 executes the process which is not relevant to the cores 1 and 2, for example, it is not necessary for the cores 1 and 2 to acquire the execution point of the core 3. For example, this is the case where the cores 1 and 2 don't communicate with the core 3 at all (there is no INT 13), the core 3 operates in AMP while the cores 1 and 2 operate in SMP, or the program executed by the cores 1 and 2 does not have any influence on the program executed by the core 3 in terms of processing (the calculation results are not shared between the core 1 or 2 and the core 3, there is no execution order dependent relationship between the programs 1 and 2, the programs 1 and 2 are not synchronized, etc., for example).

In this case, since the core 3 affects the event detected by the cores 1 and 2 with a low probability, the necessity for the cores 1 and 2 to record the execution history of the core 3 is low.

As is described above, the processor 100 according to the embodiment can record the execution history when plural cores execute the respective programs such that the execution order of the instructions can be identified. Further, a single grouping of the code block can be recorded with the reduced number of the code block addresses, and thus the execution history can be recorded efficiently.

## Claims

1. A processor in which plural cores perform respective programs, comprising:
a first own core execution point acquiring part configured to acquire first code block information if a first core executes an execution history recording instruction described at an execution history recording point in the program, the first code block information indicating, with a single address, a series of instructions executed by the first core;
a first other core execution point acquiring part configured to acquire first execution address information of an instruction, the instruction being executed by a second core, if the first core executes the execution history recording instruction; and
a first execution point information recording part configured to record the first code block information and the first execution address information in a shared memory in time series such that they are associated with each other.

2. The processor of claim 1, further comprising:
a second own core execution point acquiring part configured to acquire second code block information if the second core executes the execution history recording instruction, the second code block information indicating, with a single address, a series of instructions executed by the second core;
a second other core execution point acquiring part configured to acquire second execution address information of an instruction, the instruction being executed by the first core, if the second core executes the execution history recording instruction; and
a second execution point information recording part configured to record the second code block information and the second execution address information in the shared memory in time series such that they are associated with each other.

3. The processor of claim 1 or 2, wherein the shared memory is a ring buffer in which the first and second cores write the first code block information and the first execution address information or the second code block information and the second execution address information in order of address of the shared memory.

4. The processor of claim 3, wherein if an occurrence of a predetermined event is detected, the first or second execution point information recording part stops recording the first code block information and the first execution address information or the second code block information and the second execution address information in the shared memory.

5. The processor of claim 1, wherein the first execution point information recording part records, in addition to the first code block information and the first execution address information, one or more of a value of a general purpose register of the first core, a value of a flag register, a value of a stack pointer, and an input value acquired via an input interface in the shared memory in time series.

6. The processor of claim 1, wherein the first execution point information recording part records, in addition to the first code block information and the first execution address information, address information in the shared memory in time series, the address information indicating a destination address to be reached when the first core has executed an instruction subsequent to the execution history recording instruction.

7. The processor of claim 1, wherein the execution history recording point corresponds to a step immediately before a conditional branch instruction or a subroutine call instruction.

8. The processor of claim 1, wherein the execution history recording point corresponds to a step immediately before an end or a beginning of a series of instructions, the series of instructions providing a single grouping of functions.

9. The processor of claim 4, wherein the event is an expansion of an air bag.

10. An electronic control unit in which the processor of claim 1 is installed.

11. A generating program for generating the program recited in claim 1, the generating program causing a CPU to execute steps of:
reading a binary code of the program;
extracting an address of an instruction of the binary code which corresponds to any of conditional branch instructions, the conditional branch instructions being registered in a conditional branch instruction list; and
describing an instruction or a call instruction immediately before the extracted address, the instruction corresponding to the first own core execution point acquiring part, the second other core execution point acquiring part and the first execution point information recording part.

12. A processor that is connected to a second processor, comprising:
a first own core execution point acquiring part configured to acquire first code block information if the processor executes an execution history recording instruction described at an execution history recording point in a first program, the first code block information indicating, with a single address, a series of instructions of the first program;
a first other core execution point acquiring part configured to acquire first execution address information of an instruction of a second program, the instruction of the second program being executed by the second processor, if the processor executes the execution history recording instruction; and
a first execution point information recording part configured to record the first code block information and the first execution address information in a first memory in time series such that they are associated with each other.

13. A second processor that is connected to the processor of claim 12, comprising:
a second own core execution point acquiring part configured to acquire second code block information of the executing instruction of the second program when the first execution address information is requested by the first other core execution point acquiring part;
a second other core execution point acquiring part configured to acquire second execution address information of an instruction of the first program, the instruction of the first program being executed by the first processor, when the first execution address information is requested by the first other core execution point acquiring part; and
a second execution point information recording part configured to record the second execution address information and the third execution address information in a second memory in time series such that they are associated with each other.

14. A processor in which plural cores perform respective programs, comprising:
an instruction monitoring part configured to determine whether instructions executed by a first and second cores correspond to registered instructions;
an execution point acquiring part configured to acquire first or second code block information and first or second execution address information if the instruction executed by the first or second core corresponds to the registered instruction, wherein the first code block information indicates, with a single address, a series of instructions executed by the first core, the second code block information indicates, with a single address, a series of instructions executed by the second core, the first execution address information indicates an address of the instruction being executed by the second core, and the second execution address information indicates an address of the instruction being executed by the first core; and
an execution point information recording part configured to record the first code block information and the first execution address information or the second code block information and the second execution address information in a memory such that they are associated with each other.
